# EUROPEAN PATENT SPECIFICATION

(11) **EP 2 710 230 B1**
(45) Date of publication and mention of the grant of the patent: **28.10.2015**
(21) Application number: 12717566.9
(22) Date of filing: 23.04.2012
(51) Int. Cl.: F01D 9/02, F01D 11/00

(54) **TURBINE COMBUSTION SYSTEM TRANSITION PIECE SIDE SEALS**
SEITENDICHTUNG FÜR DEN ÜBERGANGSKANAL EINER TURBINENBRENNERANORDNUNG
JOINT LATERAL POUR UN CONDUIT DE TRANSITION D'UN SYSTEME DE COMBUSTION DE TURBINE

(30) Priority: 20.05.2011 US 201161488218 P; 19.10.2011 US 201113276439
(43) Date of publication of application: 26.03.2014
(73) Proprietor: Siemens Energy, Inc., Orlando, FL 32826-2399 (US)
(72) Inventor: MOEHRLE, Frank, Palm City, FL 34990 (US); NARCUS, Andrew, R., Loxahatchee, L 33470 (US); CARELLA, John, Jupiter, FL 33458 (US); MILLON SAINTE-CLAIRE, Jean-Max, Jupiter, FL 33458 (US)
(74) Representative: Maier, Daniel Oliver
(86) International application number: PCT/US2012/034618
(87) International publication number: WO 2012/161904

(56) References cited:
- EP-A1- 0 357 984
- EP-A1- 1 566 521
- EP-A2- 0 989 287
- US-A1- 2009 026 713

## Description

### FIELD OF THE INVENTION

This invention relates to seals in the combustion section of gas turbines, and particularly to side seals between adjacent transition duct exit frames.

### BACKGROUND OF THE INVENTION

The combustion system of a gas turbine is designed to contain the hot gasses and flame produced during the combustion process and to provide an efficient channel to transport the hot gas to the turbine section of the engine. An industrial gas turbine engine commonly has several individual combustion device assemblies arranged in a circular array about the engine shaft. A respective circular array of transition ducts, also known as transition pieces, connects the outflow of each combustor to the turbine inlet. Each transition piece may be a tubular or other appropriately shaped structure that channels the combustion gas between a combustion chamber and the first row or stage of stationary vanes or nozzles of the turbine section.

The interface between the combustion system and the turbine section occurs between an exit frame on the downstream end of each transition piece and the inlet of the turbine. Each exit frame mates with a first stage vane retaining ring or element. Upper and lower seals are provided on each exit frame to seal against respective radially outer and inner retainer elements of the first stage vanes to minimize leakage between the transition ducts and the nozzles. Side seals between each pair of adjacent exit frames minimize leakage between the exit frames. The effectiveness and reliability of both types of seals are important to achieving engine efficiency and performance goals.

In US2009/0026713A1 there is disclosed a differential pressure-responsive sealing apparatus which is inserted between seal grooves formed in the side surfaces of outlet flange portions of adjacent combustor transition pipes to seal clearance between the side surfaces. The sealing apparatus comprises a minimum required number of seal pieces connected in the longitudinal direction for imparting flexibility. The seal piece comprises a heat resistant, wear resistant material, and having a pair of sealing ridges each having an arcuate surface contacting the wall surface of each seal groove.

### BRIEF DESCRIPTION OF THE DRAWINGS

The invention is explained in the following description in view of the drawings that show:
FIG. 1 is a schematic view of an exemplary gas turbine design within which embodiments of the invention may be employed.
FIG. 2 is a perspective aft view of a combustion system transition piece.
FIG. 3 is a perspective view of a transition piece exit frame with a side seal in accordance with aspects of the invention.
FIG. 4 is a rear perspective view of a seal strip retention block having two slots.
FIG. 5 is a perspective view of an exemplary exit frame side seal in accordance with aspects of the invention.
FIG. 6 is a front view of the exemplary seal strip of FIG. 5.
FIG. 7 is a rear view of three adjacent exit frames with exemplary side seal strips between them.
FIG. 8 is a sectional view taken along line 8-8 of FIG 7.
FIG. 9 is a transverse sectional view of an exemplary seal strip showing a taper angle.

### DETAILED DESCRIPTION OF THE INVENTION

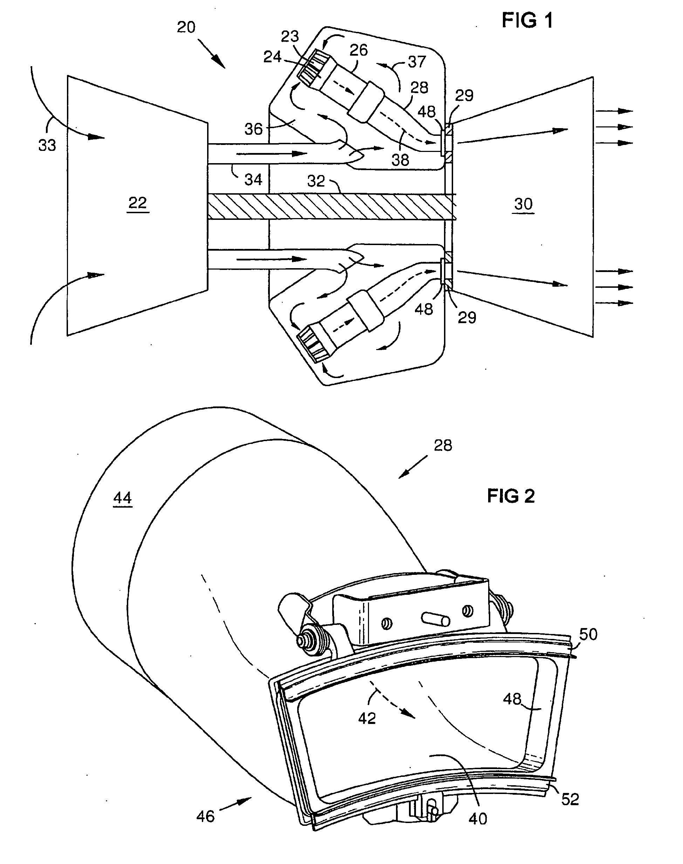

FIG. 1 is a schematic view of an exemplary gas turbine engine 20 that may include a compressor 22, fuel injectors contained within a cap assembly 24, combustion chambers 26, transition pieces 28, a turbine section 30 and an engine shaft 32 by which the turbine 30 drives the compressor 22. Several combustor assemblies 24, 26, 28 may be arranged in a circular array in a can-annular design. During operation, the compressor 22 intakes air 33 and provides a flow of compressed air 37 to the combustor inlets 23 via a diffuser 34 and a combustor plenum 36. The fuel injectors within cap assembly 24 mix fuel with the compressed air. This mixture burns in the combustion chamber 26 producing hot combustion gas 38, also called the working gas, that passes through the transition piece 28 to the turbine 30 via a sealed connection between an exit frame 48 of the transition piece 28 and turbine inlet hardware 29. The diffuser 34 and the plenum 36 may extend annularly about the engine shaft 32. The compressed airflow 37 in the combustor plenum 36 has higher pressure than the working gas 38 in the combustion chamber 26 and in the transition piece 28.

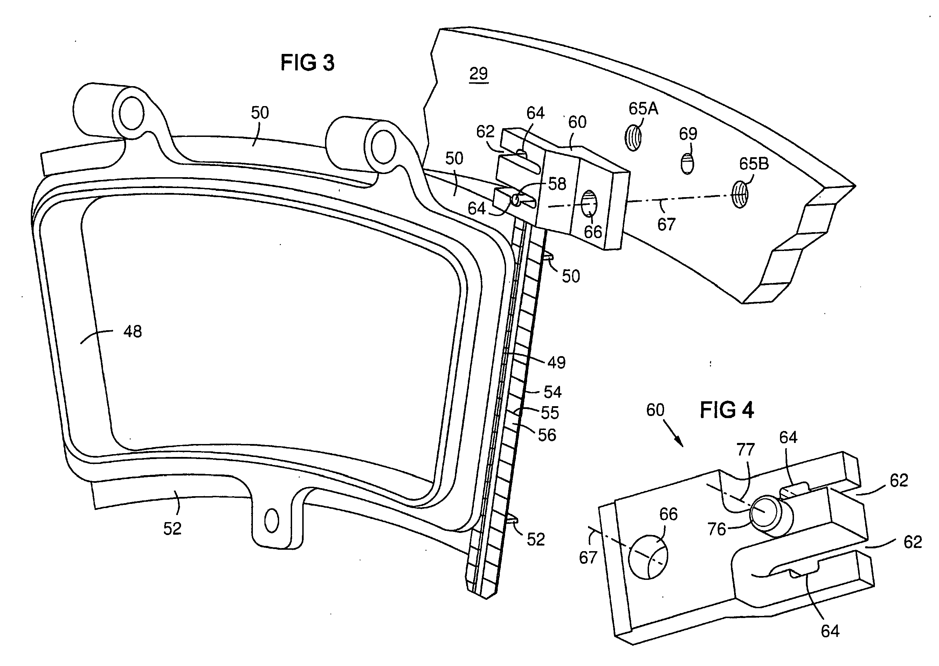

FIG. 2 is a perspective view of a transition piece 28 that may include a tubular or other appropriately shaped enclosure 40 bounding the working gas flow 42. For example, the upstream end 44 may be circular and the downstream end 46 may be approximately rectangular with curvature to match the turbine inlet curvature. An exit frame 48 may be attached to the downstream or exit end of the transition piece 28 by welding or other means. The exit frame 48 mates with the turbine inlet hardware 29 (FIG. 3) via upper and lower seals 50, 52. The exit frame 48 may be attached to the turbine inlet hardware 29 by bolts or other appropriate means. Minimizing leakage between the exit frame 48 and the turbine inlet hardware, and between adjacent exit frames 48, is critical to achieving engine efficiency and performance goals.

FIG. 3 is a front perspective view of an exit frame 48 ("front" means the upstream or forward side relative to the working gas flow 42). An exemplary side seal strip 54 in accordance with aspects of the invention is inserted into a side slot 49 or other appropriately configured recess portion formed within the exit frame 48. The side seal may be formed of a cobalt-based alloy such as conforming to AMS 5537, for example, (Haynes^{®} 25/L-605 alloy) or other known material appropriate for the application. The side seal strip 54 may be disposed between and/or adjacent to the upper and lower seals 50, 52. Side seal strip 54 may include an imperforate minimum thickness and have a plurality of transverse slots 55 for flexibility between tapered thickening portions 56. Seal strip 54 may include a retention pin 58 at one end for retention of the seal strip 54 by a retention block 60. The retention block 60 may have at least one retention well 64 for retaining the retention pin 58 and centering it between adjacent exit frames 48. The retention block 60 may have a bolt hole 66 and/or other means to fasten the retention block 60 to the turbine inlet hardware 29. The inlet hardware 29 may have alternate threaded bolt holes 65A, 65B on opposite sides of a block alignment pin hole 69 for a reversible embodiment of the retention block 60 as later described.

FIG. 4 is a rear perspective view of the seal strip retention block 60 that may have two slots 62 to receive the seal strip retention pin 58. Each slot 62 may include a retention well 64 for centering the retention pin 58 between adjacent exit frames 48. A bolt hole 66 provides means to fasten the retention block 60 to the turbine inlet hardware 29. A block alignment pin 76 may extend backward from the retention block 60. Alignment pin 76 may be inserted into a hole 69 in the turbine inlet hardware 29 to align the position of the retention block 60 in conjunction with a bolt in the bolt hole 66. The retention block 60 may be bisymmetric about a plane defined by axes 67, 77 of the bolt hole 66 and the alignment pin 76. The block alignment pin 76 may be centered between the two retention wells 64. This allows the retention block 60 to be reversed 180 degrees about the alignment pin 76 in order to use an alternate one of the threaded bolt holes 65A, 65B in the turbine inlet hardware 29. Thus, if one of the retention wells 64 becomes worn, or if one of the threaded bolt holes 65A, 65B in use becomes worn, the retention block 60 can be reversed to a second one of the threaded bolt holes 65A, 65B, and continued in use.

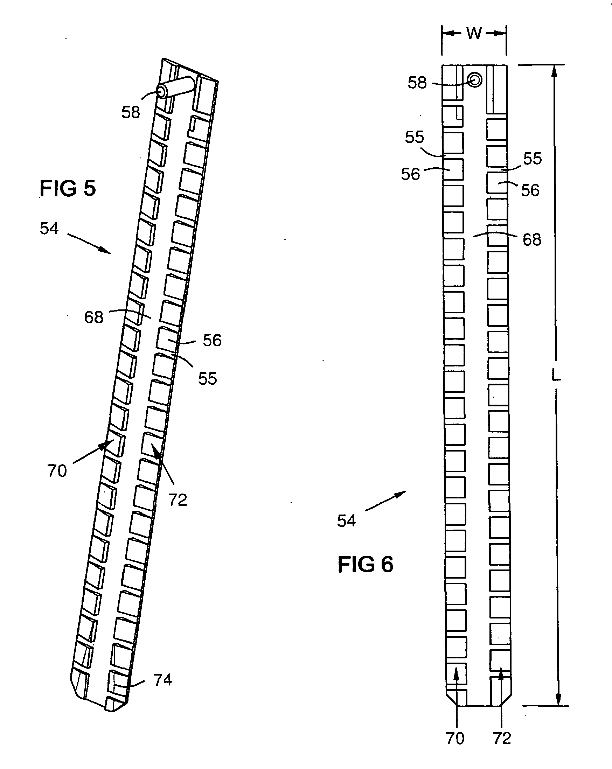

FIG. 5 is a front perspective view of a seal strip 54 comprising a central portion 68 with a first thickness that may extend over the length of the seal strip 54. This first thickness of the central portion 68 may be same as an imperforate minimum thickness of seal strip 54, as exemplified in this view. Embodiments of the invention allow for the first thickness of the central portion 68 to vary in order to accommodate particular applications. The thickening portions 56 may form first and second side portions 70, 72 that extend along each side of the central portion 68, respectively. In an exemplary embodiment of the invention, first and second side portions 70, 72 may each extend the entire length of seal strip 54. Alternate embodiments allow for first and second side portions 70, 72 to extend different lengths along respective sides of the seal strip 54 as a function of the particular application.

Each side portion 70, 72 may have a thickness greater than that of the central portion 68. Each side portion 70, 72 may be wedge-shaped, being thicker adjacent the central portion 68 and thinner toward the edges of the seal strip 54. Each thickening portion 56 may be wedge-shaped. In an exemplary embodiment of the invention, each thickening portion 56 may be uniformly sized and shaped along the entire length of side portions 70, 72. Alternate embodiments allow for each thickening portion 56 to vary in size and shape along a portion or all of each side portion 70, 72 to accommodate any particular sealing situation. Each side portion 70, 72 may be formed of a linear array of thickening portions 56, which may be in the form of base-in prisms separated by transverse slots 55 as shown. The term "base-in prism" herein means a triangular prismatic thickening portion as shown, with a base of the triangle adjacent and normal to the central portion 68, and a thickness that tapers distally toward the respective adjacent edge of the seal strip 54. An apex of each prism may meet the adjacent edge of the seal strip 54 as shown. The prisms may be formed integrally with the strip 54 or they may be attached thereto, for example, by diffusion bonding or transient liquid phase bonding. The second end of the seal strip 54 may have a reduced and/or tapered thickness 74 as shown for easy insertion into the side slot 49. The transverse slots 55 may have a bottom surface or wall coplanar with an upper surface of the imperforate minimum thickness of the seal strip 54.

FIG. 6 is a front view of a seal strip 54 with a central portion 68 and two side portions 70, 72. Each side portion 70, 72 may be formed of a linear array of thickening portions 56 separated by transverse slots 55 along the length L of the seal strip 54. The width W of the seal strip 54 between its two side edges is indicated. The transverse slots 55 of the first side portion 70 may be offset from or unaligned with the transverse slots 55 of the second side portion 72 along the length of the seal strip 54 as shown. This makes insertion of the seal strip 54 into the side slot 49 smoother and reduces stress concentrations in the seal strip 54.

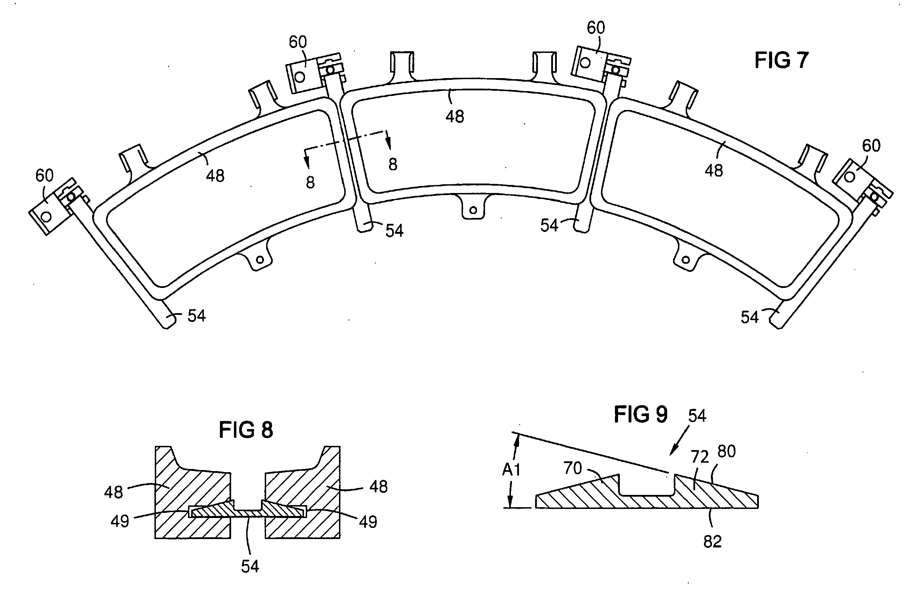

FIG. 7 is a rear or downstream view of three adjacent exit frames 48 with exemplary embodiments of side seal strips 54 between them. The upper and lower seals 50, 52 of FIG. 2 are absent in this view. All of the retention blocks 60 are oriented in the same circumferential direction in this view. However, this consistency is not necessary if the retention blocks 60 are bisymmetric as previously described.

FIG. 8 is a sectional view taken along line 8-8 of FIG. 7 showing opposed side slots 49 in two adjacent exit frames 48, and a side seal strip 54 slidably mounted therein. Each of the two opposed slots 49 may have an inner surface with a taper angle matching a taper of a respective one of the side portions 70, 72, causing the seal strip 54 to seat over an area of each of said tapered inner surfaces.

FIG. 9 is a transverse sectional view of a seal strip 54 showing a taper angle A1 of a side portion 72. The taper angle A1 may be measured between two opposing sealing contact surfaces 80, 82. The taper angle A1 should be large enough to avoid binding of the seal strip 54 in the slot 49, but not so large that the maximum thickness becomes excessive, for example to avoid stress and deformation from differential heating/cooling on the front and back sides of the seal strip 54. An exemplary range for angle A1 is 10 to 20 degrees, or 14 to 16 degrees.

The present exit frame side seal 54 apparatus allows for consistent sealing characteristics during extreme thermal operating conditions while preventing undesirable load transfer between adjacent combustion systems and turbine system hardware. The geometry of the side seal 54 provides minimum clearance between the individual exit frame 48 and seal 54 to prevent excessive dynamic excitation and consequential leakage and wear on the seal 54 and combustion system exit frames 48. This exit frame side seal 54 apparatus improves combustion system durability by reducing leakage and dynamic motion. These seal 54 performance improvements lead to an extension of overall combustion system performance and a reduction in exit frame 48 wear.

While various embodiments of the present invention have been shown and described herein, it will be obvious that such embodiments are provided by way of example only. Numerous variations, changes and substitutions may be made without departing from the invention herein. Accordingly, it is intended that the invention be limited only by the scope of the appended claims.

## Claims

1. A turbine combustion system transition exit seal apparatus comprising:
a seal strip (54) comprising a length (L), a width (W), an imperforate minimum thickness, a central portion (68) with a first thickness over the length of the strip (54), and first and second side portions (70, 72), each side portion (70, 72) comprising a thickness greater than the first thickness adjacent the central portion (68) along the length of the strip (54);
wherein the first and second side portions (70, 72) comprise a respective first and second series of transverse slots (55) along the length of the strip (54)
**characterised in that** the first thickness is the minimum thickness of the seal strip (54), and the transverse slots (55) each define regions of the minimum thickness within the respective side portions (70, 72).

2. The seal apparatus of claim 1, wherein each of the side portions taper in thickness distally toward respective first and second edges of the strip (54) with a taper angle (A1) of 10 to 20 degrees measured between two opposed sealing surfaces (80, 82) of the seal strip (54), and the transverse slots (55) of the first series are unaligned with the transverse slots (55) of the second series along the length of the strip (54).

3. The seal apparatus of claim 1 or 2, wherein the seal strip is slidably mounted into two opposed slots in two respective adjacent turbine combustion system transition exit frames, wherein each of the two opposed slots (49) comprises an inner surface with a tapered portion matching the taper angle (A1) of a respective one of the side portions.

4. The seal apparatus of any one of claims 1-3, wherein each side portion comprises a linear array of base-in prisms separated by the respective series of transverse slots (55).

5. The seal apparatus of any one of claims 1-4, further comprising a retention pin (58) extending normally from the central portion (68) of the seal strip (54) proximate a first end of the seal strip (54).

6. The seal apparatus of claim 5, further comprising a retention block (60) comprising:
a mounting hole (66);
an alignment pin (76) extending from the retention block (60) along an axis parallel to an axis of the mounting hole (66);
a first retention pin receiver slot (62) in the retention block (60), the first retention pin receiver slot (62) comprising a distal wall with a detent well (64) for receiving the retention pin (58) of the seal strip (54).

7. The seal apparatus of claim 6, further comprising:
a second retention pin receiver slot (62) in the retention block, the second retention pin receiver slot (62) comprising a second distal wall with a second detent well (64) for alternately receiving the retention pin (58) of the seal strip (54); and
wherein the retention block (60) is bisymmetric about a plane defined by the axes of the mounting hole (66) and the alignment pin (76), and the alignment pin (76) is centered between the two detent wells (64).

8. A turbine combustion system transition exit seal apparatus comprising:
an elongate strip (54) with an imperforate planar minimum thickness and a width between first and second edges;
wherein the strip (54) increases in thickness from each edge inward for a given distance to a maximum thickness, forming first and second wedges that taper in thickness distally toward the respective first and second edges with a taper angle (A1) of 10 to 20 degrees;
wherein the strip (54) has a central portion along a length of the strip with a reduced thickness that is less than the maximum thickness;
**characterised by** a plurality of transverse slots (55) in each of the wedges along the length of the strip (54), wherein the transverse slots (55) do not penetrate the minimum thickness of the strip (54)

9. The seal apparatus of claim 8, wherein the transverse slots of the first wedge are unaligned with the transverse slots (55) of the second wedge along the length of the seal strip (54).

10. The seal apparatus of claim 8 or 9, further comprising a retention pin extending from a first end of the strip (54) normally to a plane of the minimum thickness of the strip (54).

11. The seal apparatus of claim 10, wherein the first and second edges of the strip are mounted in respective first and second slots in respective adjacent exit frames of a turbine transition piece, and further comprising a retention block (60), wherein the retention pin (58) is retained in the retention block (60).

## Patentansprüche

1. Dichtungsvorrichtung für den Übergangsaustritt eines Verbrennungssystems einer Turbine mit Folgendem:
einem Dichtungsstreifen (54) mit einer Länge (L), einer Breite (W), einer unperforierten Mindestdicke, einem mittleren Abschnitt (68) mit einer ersten Dicke über die Länge des Streifens (54) und einem ersten und einem zweiten Seitenabschnitt (70, 72), wobei jeder Seitenabschnitt (70, 72) neben dem mittleren Abschnitt (68) entlang der Länge des Streifens (54) eine Dicke aufweist, die größer ist als die erste Dicke,
wobei der erste und der zweite Seitenabschnitt (70, 72) entlang der Länge des Streifens (54) eine erste beziehungsweise eine zweite Reihe quer verlaufender Schlitze (55) umfasst,
**dadurch gekennzeichnet, dass** es sich bei der ersten Dicke um die Mindestdicke des Dichtungsstreifens (54) handelt und die quer verlaufenden Schlitze (55) jeweils Regionen mit der Mindestdicke in den jeweiligen Seitenabschnitten (70, 72) definieren.

2. Dichtungsvorrichtung nach Anspruch 1, bei der sich die Dicke jedes der Seitenabschnitte distal zur ersten beziehungsweise zweiten Kante des Streifens (54) hin zwischen zwei gegenüberliegenden Dichtungsflächen (80, 82) des Dichtungsstreifens (54) gemessen in einem Kegelwinkel (A1) von 10 bis 20 Grad verjüngt und die quer verlaufenden Schlitze (55) der ersten Reihe entlang der Länge des Streifens (54) mit den quer verlaufenden Schlitzen (55) der zweiten Reihe nicht auf einer Linie liegen.

3. Dichtungsvorrichtung nach Anspruch 1 oder 2, bei der der Dichtungsstreifen verschiebbar in zwei gegenüberliegenden Schlitzen in zwei entsprechenden nebeneinanderliegenden Übergangsaustrittsgehäusen des Verbrennungssystems der Turbine befestigt ist, wobei jeder der beiden gegenüberliegenden Schlitze (49) eine Innenfläche mit einem sich verjüngenden Abschnitt umfasst, der zu dem Kegelwinkel (A1) des jeweiligen Seitenabschnitts passt.

4. Dichtungsvorrichtung nach einem der Ansprüche 1 bis 3, bei der jeder Seitenabschnitt eine lineare Anordnung von Prismen mit innen liegender Basis umfasst, die durch die entsprechende Reihe quer verlaufender Schlitze (55) voneinander getrennt sind.

5. Dichtungsvorrichtung nach einem der Ansprüche 1 bis 4, die ferner einen Arretierstift (58) umfasst, der in der Nähe eines ersten Endes des Dichtungsstreifens (54) senkrecht zum mittleren Abschnitt (68) des Dichtungsstreifens (54) verläuft.

6. Dichtungsvorrichtung nach Anspruch 5, die ferner einen Arretierblock (60) umfasst, der Folgendes umfasst:
ein Befestigungsloch (66),
einen Führungsstift (76), der von dem Arretierblock (60) aus an einer parallel zu einer Achse des Befestigungslochs (66) verlaufenden Achse entlang verläuft,
einen ersten Arretierstiftaufnahmeschlitz (62) im Arretierblock (60), wobei der erste Arretierstiftaufnahmeschlitz (62) eine distale Wand mit einer Rastvertiefung (64) zum Aufnehmen des Arretierstifts (58) des Dichtungsstreifens (54) umfasst.

7. Dichtungsvorrichtung nach Anspruch 6, die ferner Folgendes umfasst:
einen zweiten Arretierstiftaufnahmeschlitz (62) im Arretierblock, wobei der zweite Arretierstiftaufnahmeschlitz (62) eine zweite distale Wand mit einer zweiten Rastvertiefung (64) zum abwechselnden Aufnehmen des Arretierstifts (58) des Dichtungsstreifens (54) umfasst und
wobei der Arretierblock (60) um eine von den Achsen des Befestigungslochs (66) und des Führungsstifts (76) definierte Ebene bisymmetrisch und der Führungsstift (76) zwischen den beiden Rastvertiefungen (64) zentriert ist.

8. Dichtungsvorrichtung für den Übergangsaustritt eines Verbrennungssystems einer Turbine mit Folgendem:
einem länglichen Streifen (54) mit einer unperforierten planaren Mindestdicke und einer Breite zwischen einer ersten und einer zweiten Kante,
wobei sich die Dicke des Streifens (54) von jeder Kante aus über eine bestimmte Strecke nach innen hin auf eine Höchstdicke erhöht, so dass ein erster und ein zweiter Keil entsteht, deren Dicke sich zur ersten beziehungsweise zweiten Kante hin in einem Kegelwinkel (A1) von 10 bis 20 Grad distal verjüngt,
wobei der Streifen (54) entlang seiner Länge einen mittleren Abschnitt von reduzierter Dicke aufweist, die geringer ist als die Höchstdicke,
**gekennzeichnet durch** mehrere quer verlaufende Schlitze (55) in jedem der Keile entlang der Länge des Streifens (54), wobei die quer verlaufenden Schlitze (55) nicht durch die Mindestdicke des Streifens (54) verlaufen.

9. Dichtungsvorrichtung nach Anspruch 8, bei der die quer verlaufenden Schlitze des ersten Keils entlang der Länge des Dichtungsstreifens (54) mit den quer verlaufenden Schlitzen (55) des zweiten Keils nicht auf einer Linie liegen.

10. Dichtungsvorrichtung nach Anspruch 8 oder 9, die ferner einen Arretierstift umfasst, der von einem ersten Ende des Streifens (54) aus senkrecht zu einer Ebene der Mindestdicke des Dichtungsstreifens (54) verläuft.

11. Dichtungsvorrichtung nach Anspruch 10, bei der die erste und die zweite Kante des Streifens in einem ersten beziehungsweise zweiten Schlitz in jeweiligen nebeneinanderliegenden Austrittsgehäusen eines Übergangskanals einer Turbine befestigt sind, und die ferner einen Arretierblock (60) umfasst, wobei der Arretierstift (58) in dem Arretierblock (60) gehalten wird.

## Revendications

1. Dispositif d'étanchéité pour sortie de conduit de transition d'un système de combustion de turbine comprenant :
une bande d'étanchéité (54) possédant une longueur (L), une largeur (W), une épaisseur minimale non perforée, une partie centrale (68) ayant une première épaisseur sur toute la longueur de la bande (54), et une première et une seconde partie latérale (70, 72), chaque partie latérale (70, 72) ayant, adjacente à la partie centrale (68), une épaisseur plus grande que la première épaisseur sur toute la longueur de la bande (54),
étant entendu que la première et la seconde partie latérale (70, 72) comprennent, respectivement, une première et une seconde série de crans transversaux (55) sur toute la longueur de la bande (54),
**caractérisé en ce que** la première épaisseur est l'épaisseur minimale de la bande d'étanchéité (54) et **en ce que** les crans transversaux (55) définissent chacun des zones de l'épaisseur minimale à l'intérieur des parties latérales (70, 72) respectives.

2. Dispositif d'étanchéité selon la revendication 1, dans lequel chacune des parties latérales diminue d'épaisseur distalement en direction, respectivement, du premier et du second bord de la bande (54) suivant un angle d'effilement (A1) de 10 à 20 degrés mesuré entre deux surfaces d'étanchéité (80, 82) opposées de la bande d'étanchéité (54), et dans lequel les crans transversaux (55) de la première série sont désalignés par rapport aux crans transversaux (55) de la seconde série sur toute la longueur de la bande (54).

3. Dispositif d'étanchéité selon la revendication 1 ou 2, dans lequel la bande d'étanchéité est montée coulissante dans deux crans opposés de deux cadres adjacents respectifs de sortie de conduit de transition de système de combustion de turbine, étant entendu que chacun des deux crans opposés (49) comprend une surface interne présentant une partie effilée concordant avec l'angle d'effilement (A1) de celle des parties latérales lui correspondant.

4. Dispositif d'étanchéité selon l'une quelconque des revendications 1-3, dans lequel chaque partie latérale comprend un agencement linéaire de prismes à base interne séparés par les séries respectives de crans transversaux (55).

5. Dispositif d'étanchéité selon l'une quelconque des revendications 1-4, comprenant par ailleurs une broche de retenue (58) s'étendant perpendiculairement depuis la partie centrale (68) de la bande d'étanchéité (54) à proximité d'une première extrémité de la bande d'étanchéité (54).

6. Dispositif d'étanchéité selon la revendication 5, comprenant par ailleurs un bloc de retenue (60) comprenant :
un trou de montage (66) ;
une broche d'alignement (76) s'étendant depuis le bloc de retenue (60) suivant un axe parallèle à un axe du trou de montage (66) ;
une première encoche (62) de réception de broche de retenue dans le bloc de retenue (60), la première encoche (62) de réception de broche de retenue comprenant une paroi distale avec une cavité d'encliquetage (64) servant à recevoir la broche de retenue (58) de la bande d'étanchéité (54).

7. Dispositif d'étanchéité selon la revendication 6, comprenant par ailleurs :
une seconde encoche (62) de réception de broche de retenue dans le bloc de retenue, la seconde encoche (62) de réception de broche de retenue comprenant une seconde paroi distale avec une seconde cavité d'encliquetage (64) servant à recevoir alternativement la broche de retenue (58) de la bande d'étanchéité (54), et
étant entendu que le bloc de retenue (60) est bisymétrique autour d'un plan défini par les axes du trou de montage (66) et de la broche d'alignement (76), et que la broche d'alignement (76) est centrée entre les deux cavités d'encliquetage (64).

8. Dispositif d'étanchéité pour sortie de conduit de transition de système de combustion de turbine comprenant :
une bande allongée (54) présentant une épaisseur minimale plane non perforée et une largeur entre un premier bord et un second ;
étant entendu que la bande (54) augmente en épaisseur depuis chaque bord vers l'intérieur sur une distance donnée jusqu'à une épaisseur maximale, formant un premier et un second biseau dont l'épaisseur diminue distalement en direction, respectivement, du premier bord et du second suivant un angle d'effilement (A1) de 10 à 20 degrés ;
étant entendu que la bande (54) comporte sur toute une longueur de la bande une partie centrale qui a une épaisseur réduite, inférieure à l'épaisseur maximale,
**caractérisé par** une pluralité de crans transversaux (55) dans chacun des biseaux sur toute la longueur de la bande (54), étant entendu que les crans transversaux (55) ne pénètrent pas dans l'épaisseur minimale de la bande (54).

9. Dispositif d'étanchéité selon la revendication 8, dans lequel les crans transversaux du premier biseau sont désalignés par rapport aux crans transversaux (55) du second biseau sur toute la longueur de la bande d'étanchéité (54).

10. Dispositif d'étanchéité selon la revendication 8 ou 9, comprenant par ailleurs une broche de retenue s'étendant depuis une première extrémité de la bande (54) perpendiculairement à un plan de l'épaisseur minimale de la bande (54).

11. Dispositif d'étanchéité selon la revendication 10, dans lequel le premier bord de la bande et le second sont montés, respectivement, dans les premiers et les seconds crans des cadres de sortie adjacents respectifs d'un conduit de transition de turbine, et comprenant par ailleurs un bloc de retenue (60), la broche de retenue (58) étant retenue dans le bloc de retenue (60).
